# EUROPÄISCHE PATENTSCHRIFT

(11) **EP 1 065 468 B1**
(45) Veröffentlichungstag und Bekanntmachung des Hinweises auf die Patenterteilung: **23.07.2003**
(21) Anmeldenummer: 00111324.0
(22) Anmeldetag: 26.05.2000
(51) Int. Cl.: G01B 9/02, G01B 11/00, G01N 21/47

(54) **Zeilen-OCT als optischer Sensor für die Mess- und Medizintechnik**
Linear OCT for use as optical sensor in metrology and medical technology
TCO linéaire pour l'utilisation comme capteur optique dans la métrologie et la technique médicale

(30) Priorität: 26.06.1999 DE 19929406
(43) Veröffentlichungstag der Anmeldung: 03.01.2001
(73) Patentinhaber: Carl Zeiss, 89518 Heidenheim (Brenz) (DE)
(72) Erfinder: Knupfer, Klaus, Dr., 73457 Essingen (DE); Hauger, Christoph, Dr., 73431 Aalen (DE)

(56) Entgegenhaltungen:
- WO-A-98/38907
- US-A- 5 877 856
- HUANG D ET AL: "OPTICAL COHERENCE TOMOGRAPHY" SCIENCE,US,AMERICAN ASSOCIATION FOR THE ADVANCEMENT OF SCIENCE,, Bd. 254, Nr. 5035, 22. November 1991 (1991-11-22), Seiten 1178-1181, XP000604667 ISSN: 0036-8075

## Beschreibung

Die Erfindung betrifft eine Vorrichtung und ein Verfahren zur Aufnahme von Tiefenprofilen in einer Probe. Zur Aufnahme eines Tiefenprofils wird die Probe mit einem Meßstrahl beleuchtet, wobei die von der Probe reflektierte Strahlung mit Strahlung eines Referenzstrahles räumlich überlagert wird. Aus der Überlagerung resultiert ein Interferenzmuster. Die Strahlungsintensität des Interferenzmusters wird mittels eines Detektors aufgenommen und einer Auswerteeinheit zugeführt.

Es sind beispielsweise aus der DE 32 01 801 C 2, aus der WO 92/19930 sowie aus dem Artikel "Optical Coherence Tomography" von David Huang et al., veröffentlicht in SCIENCE, VOL. 254, Seite 1178-1181 vom 22.11.1991, Vorrichtungen und Verfahren bekannt, die ein Michelson Interferometer mit einem Meßzweig und einem Referenzzweig aufweisen. Bei diesen Michelson Interferometern wird die von der Probe reflektierte Strahlung des Meßzweigs mit der Strahlung des Referenzzweiges überlagert, wobei der Weg den die Strahlung im Referenzzweig zurücklegt, moduliert wird. Als Lichtquelle sind zeitlich inkoherente Lichtquellen, die multispektral sind, wie z.B. Glühlampen, Gasentladungslampen und Laserdioden, vorgesehen. Nur bei identischen optischen Weglängen von Referenzzweig und Meßzweig treten Interferenzerscheinungen bei Überlagerung der Strahlung auf. Durch Variation der optischen Weglänge im Referenzzweig wird ein Tiefenprofil der Probe aufgenommen, da nur die in der entsprechenden Tiefe der Probe reflektierte Strahlung mit der Strahlung des Referenzzweiges interferiert.

Nachteilig ist bei diesen Verfahren, die im Referenzzweig für die Modulation des optischen Weges ein bewegtes Element erforderlich ist, wobei durch die Modulationsgeschwindigkeit die für die Aufnahme eines Tiefenprofils erforderliche Zeitspanne gegeben ist. Somit hängt die Zeit, die erforderlich ist um ein Tiefenprofil aufzunehmen von der Scangeschwindigkeit des bewegten Elementes ab. Während einer Aufnahme eines Tiefenprofils sollte eine Bewegung der Probe verhindert werden, da sonst die Zuordnung von Meßpunkt des Tiefenprofils zu dem entsprechenden Meßpunkt in der Probe nur unter Berücksichtigung der Bewegung der Probe möglich ist. Damit wird aber eine 3-dimensionale Aufnahme einer Probe nahezu unmöglich, sofern die Bewegung der Probe nicht steuerbar ist. Dadurch bedingt können Aufnahmen einer lebenden Probe nur begrenzt bzw. mit begrenzter Genauigkeit durchgeführt werden. Insbesondere bei lebenden Proben ist die erforderliche Belichtungszeit von gravierender Bedeutung.

Weiterhin ist aus der US 5,877,856 bzw. DE 197 19 462 eine Vorrichtung und ein Verfahren für die Optischen Coherence Tomography (OCT) bekannt. Auch bei der aus dieser Schrift bekannten Verfahren und Vorrichtung ist es vorgesehen, dass für die Aufnahme eines Tiefenprofils die optische Weglänge im Referenzzweig durch kontinuierliche Bewegung eines Spiegels entlang der Mittenachse des Referenzstrahls bewegt wird, variiert wird. Während dieser Zeit wird ein Tiefenprofil aufgenommen, wobei die entsprechende Stelle der Probe während dieser Aufnahme bestrahlt werden muss. Die Strahlung des Referenzzweiges und die Strahlung des Messzweiges werden überlagert und auf einen Detektor fokussiert.

Auch bei dem aus dieser Schrift bekannten Verfahren und der Vorrichtung bestehen die bereits zuvor diskutierten Nachteile wie z.B. der langen Belichtungszeit.

Aus SPIE Vol. 2925, 298-303, 1996 mit Titel "Fast optical analysis in volume scatters by short coherence interferometry" ist es bekannt Tiefenprofile einer Probe aufzunehmen, indem als Lichtquelle eine sehr breitbandige Quelle eingesetzt wird, wobei die von der Lichtquelle ausgehende Strahlung mittels eines Strahlenteilers in einen Messstrahl und in einen Referenzstrahl aufgeteilt wird. Die Strahlung des Referenzzweiges legt bei der Transmission durch ein im Referenzzweig angeordneten stark dispersiven Medium in Abhängigkeit von der jeweiligen Wellenlänge in dem Referenzzweig unterschiedliche optische Wege zurück. Anschließend wird die Strahlung des Referenzzweiges mit der von der Probe reflektierten Strahlung überlagert. Der so gebildete Strahl wird mittels eines im Strahlengang angeordneten Prismas nach Wellenlängen räumlich aufgespalten. Durch Detektion der Intensität in Abhängigkeit von der dieser Position zugeordneten Wellenlänge kann auf die Reflektivität in der entsprechenden Tiefe der Probe geschlossen werden.

Nachteilig ist bei diesem Verfahren, dass bei Proben, bei denen die Reflektivität stark von der Wellenlänge des einstrahlenden Lichtes abhängt in Profiltiefen, denen eine Wellenlänge zugeordnet ist, die bezogen auf das zu untersuchende Medium nur eine vernachlässigbare Reflektivität aufweist, eine Untersuchung in dieser Profiltiefe nicht möglich ist. Weiterhin wird durch das starke dispersive Medium, insbesondere dessen Dispersivität, die maximale Scantiefe bzw. Profiltiefe beschränkt. Daraus resultiert, dass es erforderlich sein kann, dass der Referenzstrahl große Wege im dispersivem Medium zurücklegen muß, um einen akzeptablen Scanbereich durch eine entsprechende Aufspaltung der Strahlung in Abhängigkeit von der Wellenlänge im Referenzzweig zu erreichen.

Hinzu kommt daß die Bereitstellung einer dementsprechend breitbandigen Lichtquelle nur beschränkt möglicht ist.

Aufgabe der Erfindung ist es eine Vorrichtung und ein Verfahren bereitzustellen, bei dem die Aufnahme von Tiefenprofilen mittels sehr kurzer Lichtpulse möglich ist.

Weiterhin lag der Erfindung die Aufgabe zugrunde eine Vorrichtung und ein Verfahren zur Aufnahme von Tiefenprofilen bereitzustellen, welche ohne bewegte Elemente im Referenzzweig auskommen.

Die Aufgabe der Erfindung wird durch die Merkmale der Patentansprüche 1 und 9 gelöst.

Durch die Maßnahme bei einer Vorrichtung zur Aufnahme von Tiefenprofilen einen Referenzstrahl und einen Messstrahl beabstandet voneinander anzuordnen, wobei durch diese eine einem Detektor zugeordnete Sensorfläche auf einem Teilbereich ihrer Erstreckung gleichzeitig durch den Referenzstrahl und den Messstrahl bestrahlt wird, ist ein Verfahren und eine Vorrichtung geschaffen, mit der die Aufnahme von Tiefenprofilen mit sehr kurzen Belichtungszeiten möglich ist, wobei der Überlappungsbereich ein Tiefenprofil darstellt. Bei diesem Verfahren und dieser Vorrichtung sind keine bewegten Elemente zur Modulation des optischen Weges in dem Referenzzweig erforderlich, da durch die Bereitstellung einer flächigen Bestrahlung unterschiedliche optische Wege der jeweiligen Strahlung bis zur Sensorfläche zurückzulegen sind bezogen auf einem dem jeweiligen Strahl zugeordneten Strahlenausgang. Aus der Differenz der unterschiedlichen Wege für die Strahlung des Referenzzweiges und des Messstrahls bis zur Sensorfläche ergibt sich der Messpunkt in der entsprechenden Tiefe der Probe, damit eine konstruktive Interferenz der entsprechenden Strahlung resultiert.

Die auf diesem Teilbereich, der gleichzeitig durch den Referenzstrahl und den Messstrahl bestrahlt wird, auftretenden Interferenzerscheinungen geben Aufschluss über die Reflektivitäten der Probe und deren Beschaffenheit in den entsprechenden Tiefen.

Es hat sich als vorteilhaft herausgestellt dem Meßstrahl und dem Referenzstrahl eine Optik zuzuordnen, durch die der jeweilige Strahl aufgeweitet wird, so daß die Sensorfläche möglichst großflächig durch jeden Strahl bestrahlt wird. In Abhängigkeit von der maximalen Differenz der optischen Wege von Strahlenausgang des jeweiligen Strahls bis zum Erreichen der Sensorfläche wird die maximale Scantiefe in der Probe festgelegt.

Es hat sich als vorteilhaft herausgestellt den Meßstrahl und den Referenzstrahl in Fasern bzw. Lichtleitern, vorzugsweise Monomodfasern, zu führen, die endseitig jeweils mit einer Optik zur Aufweitung des jeweiligen Strahls versehen sind. Solche mit einer Optik zur Bereitstellung einer hohen Apertur bzw. für die Aufweitung des Strahls versehene Lichtleiter sind bereits als Standardbauteile kostengünstig erhältlich.

In einigen Ausführungsbeispielen hat es sich als vorteilhaft herausgestellt eine einzige Optik für die Aufweitung von Meß- und Referenzstrahl vorzusehen. Ist insbesondere die Sensorfläche in Form einer Sensorzeile ausgebildet, so hat es sich als vorteilhaft herausgestellt eine Optik für eine Fokussierung der Strahlung von Meßstrahl und Referenzstrahl auf diese Sensorzeile vorzusehen, wobei eine Aufweitung der jeweiligen Strahlen in Richtung der Erstreckung der Sensorzeile erhalten bleibt, so daß ein möglichst großer Teilbereich gleichzeitig durch Meß- und Referenzstrahl bestrahlt wird.

Das Vorsehen einer Sensorzeile ist zur Einsparung von Kosten vorteilhaft, da bereits durch eine einzige Sensorzeile alle Informationen eines Tiefenprofils enthalten sind. Weitere vorteilhafte Maßnahmen sind in weiteren abhängigen Ansprüchen beschrieben.

Im folgenden wird die Erfindung anhand eines Ausführungsbeispieles näher beschrieben.

Es zeigt:
- Figur 1: Schematische Darstellung einer Vorrichtung zur Aufnahme von Tiefenprofilen;
- Figur 2: Detaildarstellung des den Detektor umfassenden Teilbereichs; und
- Figur 3: Detektor mit einer CCD-Zeile.

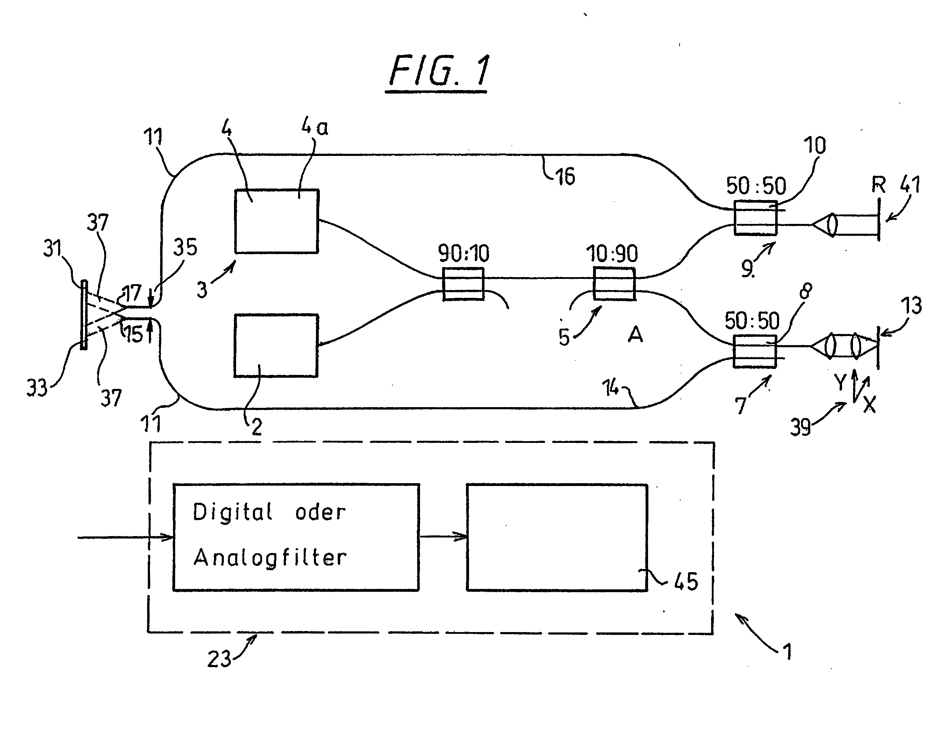

Anhand von Figur 1 wird zunächst der prinzipielle Aufbau einer Vorrichtung 1 zur Aufnahme von Tiefenprofilen beschrieben. Diese Vorrichtung 1 weist als Strahlungsquelle 3 eine Superlumineszenzdiode 4a auf, die zeitlich inkoherente Strahlung abgibt. Diese Superlumineszenzdiode 4a stellt eine Weißlichtquelle 4 dar. Die von der Superlumineszenzdiode 4a abgegebene Strahlung wird mit von einer Laserdiode 2 vermischt, die zeitlich koherente Strahlung im für das menschliche Auge sichtbaren Frequenzbereich abgibt. Diese Laserdiode 2 ist vorgesehen, um den Strahlenverlauf der im nicht sichtbaren Bereich abgegebenen Strahlung der Superlumineszenzdiode 4a verfolgen zu können. Die Strahlungsintensität des auf diese Weise gebildeten Strahls geht zu 90 % auf die Superlumineszenzdiode 4a und zu 10 % auf die Laserdiode 2 zurück. Selbstverständlich können auch andere Mischungsverhältnisse gewählt werden. Diese Strahlung wird in einen Referenzzweig 16 bzw. Referenzstrahl 9, in den bei dem dargestellten Ausführungsbeispiel 10 % der Strahlungsintensität eingekoppelt werden, und einen Meßzweig 14 bzw. Meßstrahl 7, in den die verbleibenden 90 % eingekoppelt werden, aufgeteilt.

In dem dargestellten Ausführungsbeispiel ist dem Referenzstrahl 9 ein Mischer 10 zugeordnet, durch den 50 % der eingekoppelten Strahlung mit 50 % der von einem in dem Referenzzweig 16 angeordneten Spiegel 41 reflektierten Strahlung gemischt werden. Die derart aufbereitete Strahlung des Referenzzweiges 9 wird mittels eines Lichtleiters 11 zu einem Strahlenausgang 17 des Referenzzweiges 9 geleitet. Als Lichtleiter 11 werden insbesondere Monomodfasern, durch die die optische Weglänge des Referenzzweiges 16 mit hoher Genauigkeit festgelegt und bekannt ist, verwendet.

Die in den Meßzweig 14 eingekoppelte Strahlung 7 wird ebenfalls durch einen Mischer 8 zu 50 % mit der von der im Meßzweig 14 angeordneten Probe 13 reflektierten Strahlung vermischt und ebenfalls über einen Lichtleiter 11 zu einem Strahlenausgang 15 geleitet. Diese beiden Strahlenausgänge 15 und 17 sind beabstandet voneinander angeordnet. Von jedem Strahlenausgang 15, 17 geht ein Lichtkegel 37 aus, der auf eine zu beleuchtende als Sensorfläche 29 vorgesehene CCD-Zeile 33 eines Detektors 25 gerichtet ist. Durch diese von den Strahlenausgängen 15, 17 des Meß- und Referenzstrahls 7,9 ausgehenden Lichtkegeln 37 wird ein Teilbereich 27 der CCD-Zeile 33 gleichzeitig beleuchtet. Nur bei identischen zurückgelegten optischen Wegen der Strahlung 9 des Referenzzweiges 16 und der Strahlung 7 des Meßzweiges 14 treten Interferenzerscheinungen auf, so daß durch Detektion der Strahlungsintensität im Teilbereich 27 durch Auswertung der verschiedenen zurückzulegenden Weglängen vom jeweiligen Strahlenausgang F1, F2 zum jeweiligen Ort der CCD-Zeile ein Tiefenprofil der zu untersuchenden Probe abgeleitet wird, indem die Differenz der zurückzulegenden optischen Wege bis zum Erreichen des jeweiligen Punktes der CCD-Zeile 33 herangezogen wird. Dabei ist der optische Wege im Referenzzweig 16 und im Meßzweig 14 von der Strahlungsquelle 3 bis zum Strahlenausgang 15,17 unter der Annahme einer Reflektion der Strahlung im Meßzweig an einem vorbestimmten Bezugspunkt, der vorzugsweise die Probenoberfläche ist, identischer Länge. Ausgehend vom Referenzpunkt erhält man durch Division durch zwei der ermittelten Wegdifferenz von den Strahlenausgängen 15,17 zu der Sensorzeile 31 den entsprechenden Meßpunkt in der entsprechenden Tiefe der Probe unter Berücksichtigung der optischen Dichte der Probe.

Die mittels der CCD-Zeile 33 aufgenommenen Intensitäten werden einer zugeordneten Auswerteeinheit 23, die mit einem Digital- oder Analogfilter versehen sein kann, zugeleitet. Die von der Auswerteeinheit 23 ermittelten Reflektivitäten werden mittels einer zugeordneten Bildverarbeitungeinrichtung 45 graphisch dargestellt.

Dieses Verfahren hat den Vorteil, daß zur Aufnahme eines Tiefenprofils ein sehr kurzer Belichtungspuls ausreicht, da ein Tiefenscan bereits durch Aufnahme der detektierten Intensitäten einer einzigen CCD-Zeile 33 vorliegt, wobei die Auswertung später erfolgen kann. Somit gehen Bewegungen der Probe 13 nur während dieser äußerst kurzen Belichtungszeit ein und die Probe wird durch die nur kurz andauernde Bestrahlung durch die Strahlung der Lichtpulse nur kurzzeitig beeinflußt bzw. belastet. Die Auswertung einer aufgenommenen CCD-Zeile 33 kann und darf ein Vielfaches der Belichtungszeit erfordern.

In dem dargestellten Ausführungsbeispiel ist vor der Probe 13 eine Einrichtung 39, die ein Scannen über die Probe 13 ermöglicht, angeordnet. Durch Scannen über die Probe 13 kann somit ein dreidimensionales Bild von der Probe 13 erstellt werden.

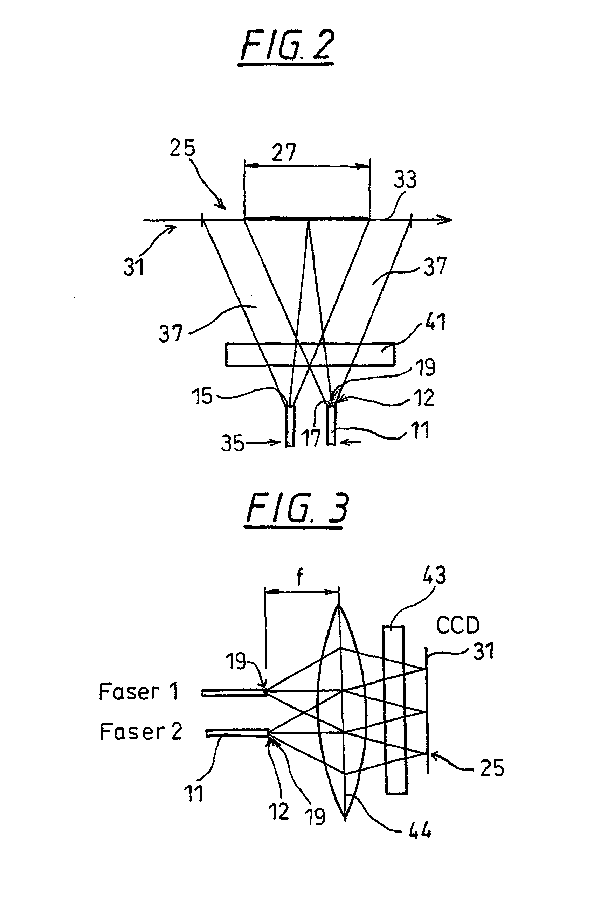

Der in Figur 2 dargestellte Ausschnitt zeigt voneinander beabstandet angeordnete Faserenden 15 und 17 und eine CCD-Zeile 33 als Sensorfläche 29, wobei zwischen den Faserenden 15,17 und der CCD-Zeile 33 eine Zylinderlinse 43 zur Fokussierung der von den Faserenden 15,17 ausgehenden Strahlung auf die CCD-Zeile 33 vorgesehen ist.

Weiterhin kann zwischen den Faserausgängen 15 und 17 und der CCD-Zeile 33 eine zusätzliche Linse 44, wie in Figur 3 gezeigt, vorgesehen, durch die ein streng periodisches Interferenzmuster erzeugt wird.

Wird als Pixelgröße 10 µm bei 5.000 Pixeln für eine CCD-Zeile 33 angenommen und wird davon ausgegangen, daß durch die den Faserausgängen 15,17 zugeordnete Optik 19 ein Lichtkegel 37, der jeweils 12° überstreicht, ausgeht und wird als mittlere Wellenlänge der für die Untersuchung eingesetzten Strahlung 800 nm angenommen, und sind die Faserenden 15,17 in einem Abstand von 24 cm vor der CCD-Zeile 33 angeordnet, so ergibt sich, daß zwei Punkte mit einem Abstand von 10 µm auflösbar sind. Die Faserenden 15,17 sollten in einem Abstand von 10 mm zueinander angeordnet sein. Bei solch einer Anordnung ist ein Tiefenhub bis zu 2 mm möglich.

### Bezugszeichenliste:

- 1: Vorrichtung
- 2: Laserdiode (zentr. Kohärent.)
- 3: Strahlungsquelle
- 4: Weißlichtquelle
- 4a: Superlumineszenzdiode
- 5: Strahlenteiler
- 7: Meßstrahl
- 8: Mischer
- 9: Referenzstrahl
- 10: Mischer
- 11: Lichtleiter
- 12: Faserenden
- 13: Probe
- 14: Meßzweig
- 15: Strahlenausgang Meßstrahl
- 16: Referenzzweig
- 17: Strahlenausgang
Referenzstrahl
- 19: Optik
- 23: Auswerteeinheit
- 25: Detektor
- 27: Teilbereich
- 29: Sensorfläche
- 31: Sensorzeile
- 33: CCD-Zeile
- 35: Abstand
- 37: Lichtkegel
- 39: Einrichtung zum Abscannen der Probe

- 41: Spiegel
- 43: Zylinderlinse
- 44: zusätzliche Linse
- 45: Bildverarbeitungseinrichtung

## Patentansprüche

1. Vorrichtung zur Aufnahme von Tiefenprofilen in einer Probe mit einem bezüglich eines Referenzzeitpunktes zu einem Messstrahl kohärenten Referenzstrahl, wobei die Vorrichtung folgende Komponenten enthält:
- eine Einrichtung zur räumlichen Überlagerung des von der Probe reflektierten Messstrahls mit dem Referenzstrahl;
- eine dieser Einrichtung zugeordnete Auswerteeinheit (23) mit einem Detektor (25) und einer diesem zugeordneten Sensorfläche (29);
- eine erste Faser bzw. einen ersten Lichtleiter (11) zur Führung des Referenzstrahls;
- eine zweite Faser bzw. einen zweiten Lichtleiter (11) zur Führung des Messstrahls, wobei die auf den Detektor gerichteten Strahlengänge (15, 17) der Fasern bzw. Lichtleiter (11) in einem Abstand (35) voneinander angeordnet sind und zwar so, dass der Referenzstrahl (9) und der Messstrahl (7) mindestens einen Teilbereich (27) der Sensorfläche (29) überlappend flächig bestrahlen.

2. Vorrichtung zur Aufnahme von Tiefenprofilen nach Anspruch 1, wobei dem Messstrahl (7) und dem Referenzstrahl (9) eine Optik (19) für eine Aufweitung des jeweiligen Strahls (7, 9) zugeordnet ist.

3. Vorrichtung zur Aufnahme von Tiefenprofilen nach Anspruch 2, wobei die Sensorfläche (29) durch von den Strahlenausgängen (15,17) der Fasern bzw. Lichtwellenleiter (11) ausgehenden Lichtkegeln (37) bestrahlt sind.

4. Vorrichtung zur Aufnahme von Tiefenprofilen nach mindestens einem der vorangegangenen Ansprüche, wobei die Sensorfläche (29) als Sensorzeile (31) ausgebildet ist.

5. Vorrichtung zur Aufnahme von Tiefenprofilen nach mindestens einem der vorangegangenen Ansprüche, wobei der Messstrahl (7) und der Referenzstrahl (9) aus einem von einer Strahlungsquelle (3) ausgehenden Strahl, in dem ein Strahlteiler (5) angeordnet ist, hervorgehen.

6. Vorrichtung zur Aufnahme von Tiefenprofilen nach mindestens einem der vorangegangenen Ansprüche, wobei die Strahlungsquelle (3) eine gepulste Strahlung abgebende Strahlungsquelle (3) ist.

7. Vorrichtung zur Aufnahme von Tiefenprofilen nach mindestens einem der vorangegangenen Ansprüche, wobei als Strahlungsquelle (3) eine Weißlichtquelle (4) vorgesehen ist.

8. Vorrichtung zur Aufnahme von Tiefenprofilen nach mindestens einem der vorangegangenen Ansprüche, wobei der Messtrahl (7) mit einer Einrichtung (39) zum räumlichen Abscannen der Probe (13) versehen ist.

9. Verfahren unter Verwendung einer Vorrichtung gemäß mindestens einem der vorangegangenen Ansprüche, wobei mit dem Messstrahl (7) eine Probe (13) bestrahlt wird und die von der Probe (13) reflektierte Strahlung, den reflektierten Messstrahl (7) bildend, mindestens einen Teilbereich (27) der Sensorfläche (29) bestrahlt, der gleichzeitig durch den Referenzstrahl (9) bestrahlt wird.

10. Verfahren nach Anspruch 10, wobei die Auswerteeinheit (23) aus den aufgenommenen Strahlungsintensitäten einer als Sensorfläche (29) vorgesehenen Sensorzeile (31) die Reflektivitäten in den Schichttiefen der Probe (13) ermittelt, die mittels einer Bildverarbeitungseinrichtung (45) graphisch darstellbar sind.

## Claims

1. Apparatus for recording depth profiles in a sample with the aid of a reference beam which is coherent with a measuring beam with reference to a reference instant, the apparatus including the following components:
- a device for spatially superimposing the measuring beam reflected by the sample with the reference beam;
- an evaluation unit (23), assigned to this device, having a detector (25) and a sensor surface (29) assigned to the latter;
- a first fibre or a first optical conductor (11) for guiding the reference beam; and
- a second fibre or a second optical conductor (11) for guiding the measuring beam, the beam outputs (15, 17), directed onto the detector, of the fibres or optical conductors (11) being arranged at a spacing (35) from one another, specifically such that the reference beam (9) and the measuring beam (7) irradiate at least one subregion (27) of the sensor surface (29) in an overlapping planar fashion.

2. Apparatus for recording depth profiles according to Claim 1, in which the measuring beam (7) and the reference beam (9) are assigned an optical system (19) for expanding the respective beam (7, 9).

3. Apparatus for recording depth profiles according to Claim 2, in which the sensor surface (29) is irradiated by light cones (37) emanating from the beam outputs (15, 17) of the fibres or optical waveguides (11).

4. Apparatus for recording depth profiles according to at least one of the preceding claims, in which the sensor surface (29) is designed as a sensor row (31).

5. Apparatus for recording depth profiles according to at least one of the preceding claims, in which the measuring beam (7) and the reference beam (9) emanate from a beam which emanates from a radiation source (3) and in which a beam splitter (5) is arranged.

6. Apparatus for recording depth profiles according to at least one of the preceding claims, in which the radiation source (3) is a radiation source (3) outputting pulsed radiation.

7. Apparatus for recording depth profiles according to at least one of the preceding claims, in which a white light source (4) is provided as radiation source (3).

8. Apparatus for recording depth profiles according to at least one of the preceding claims, in which the measuring beam (7) is provided with a device (39) for spatially scanning the sample (13).

9. Method using an apparatus in accordance with at least one of the preceding claims, in which a sample (13) is irradiated by the measuring beam (7), and the radiation reflected by the sample (13) and forming the reflected measuring beam (7) irradiating at least one subregion (27) of the sensor surface (29), which is simultaneously irradiated by the reference beam (9).

10. Method according to Claim 10, in which the evaluation unit (23) uses the recorded beam intensities of a sensor row (31) provided as sensor surface (29) to determine the reflectivities in the layer depth of the sample (13), which can be displayed graphically by means of an image processing device (45).

## Revendications

1. Dispositif d'enregistrement de profils de profondeur dans un échantillon avec un faisceau de référence cohérent par rapport à un moment de référence associé à un faisceau de mesure, le dispositif contenant les composants suivants :
- un dispositif pour superposer spatialement le faisceau de mesure réfléchi par l'échantillon au faisceau de référence ;
- une unité d'exploitation (23) affectée à ce dispositif comprenant un détecteur (25) et une surface de détection (29) affectée à ce dernier ;
- une première fibre ou un premier guide d'ondes (11) pour guider le faisceau de référence ;
- une seconde fibre ou un second guide d'ondes (11) pour guider le faisceau de mesure, les sorties de faisceau (15, 17) des fibres ou des guides d'ondes (11) dirigées sur le détecteur étant aménagées à une distance (35) les unes des autres et ce, de sorte que le faisceau de référence (9) et le faisceau de mesure (7) exposent au moins une zone partielle (27) de la surface de détection (29) en superposition à plat.

2. Dispositif d'enregistrement de profils de profondeur selon la revendication 1, dans lequel une optique (19) utilisée pour un élargissement du faisceau respectif (7, 9) est affectée au faisceau de mesure (7) et au faisceau de référence (9).

3. Dispositif d'enregistrement de profils de profondeur selon la revendication 2, dans lequel la surface de détection (29) est exposée par les cônes lumineux (37) émanant des sorties de faisceau (15, 17) des fibres ou des guides d'ondes (11).

4. Dispositif d'enregistrement de profils de profondeur selon au moins l'une quelconque des revendications précédentes, dans lequel la surface de détection (29) se présente sous la forme d'une ligne de capteurs (31).

5. Dispositif d'enregistrement de profils de profondeur selon au moins l'une quelconque des revendications précédentes, dans lequel le faisceau de mesure (7) et le faisceau de référence (9) émanent d'un faisceau de sortie d'une source de rayonnement (3), dans lequel un diviseur de faisceau (5) est aménagé.

6. Dispositif d'enregistrement de profils de profondeur selon au moins l'une quelconque des revendications précédentes, dans lequel la source de rayonnement (3) est une source de rayonnement (3) délivrant un rayonnement pulsé.

7. Dispositif d'enregistrement de profils de profondeur selon au moins l'une quelconque des revendications précédentes, dans lequel il est prévu comme source de rayonnement (3) une source de lumière blanche (4).

8. Dispositif d'enregistrement de profils de profondeur selon au moins l'une quelconque des revendications précédentes, dans lequel le faisceau de mesure (7) est pourvu d'un dispositif (39) pour le balayage spatial de l'échantillon (13).

9. Procédé pour l'utilisation d'un dispositif selon au moins l'une quelconque des revendications précédentes, dans lequel un échantillon (13) est exposé au faisceau de mesure (7) et le rayonnement réfléchi par l'échantillon (13), formant le faisceau de mesure réfléchi (7), expose au moins une zone partielle (27) de la surface de détection (29), qui est exposée simultanément au faisceau de référence (9).

10. Procédé selon la revendication 10, dans lequel l'unité d'exploitation (23) détermine, à partir des intensités de rayonnement enregistrées d'une ligne de capteurs (31) prévue comme surface de détection (29), les réflectivités aux profondeurs stratifiées de l'échantillon (13), qui peuvent être représentées graphiquement au moyen d'un dispositif de traitement d'image (45).
